# EUROPEAN PATENT APPLICATION

(11) **EP 0 915 131 A1**
(43) Date of publication of application: **12.05.1999**
(21) Application number: 98309060.6
(22) Date of filing: 05.11.1998
(51) Int. Cl.: C08K 5/523, C08K 5/3492

(54) **Flame-retarded thermoplastic resin composition**

(30) Priority: 10.11.1997 JP 307194/97
(71) Applicant: Ajinomoto Co., Inc., Tokyo 104 (JP)
(72) Inventor: Atarashi, Yasunori, c/o Central Res. Laboratories, Kawasaki-ku, Kanagawa-ken (JP); Miyachi, Yasunori, c/o Central Res. Laboratories, Kawasaki-ku, Kanagawa-ken (JP)
(74) Representative: Nicholls, Kathryn Margaret

(57) **Abstract**

A flame-retarded thermoplastic resin composition is provided which is excellent in its workability, heat resistance, humidity resistance, mechanical strength and flame retardance. The composition comprises 100 parts by weight of a thermoplastic resin, from 1 to 50 parts by weight of an aromatic orthophosphate ester of formula (I) which is solid at normal temperature (25°C), and from 1 to 50 parts by weight of a nitrogen-containing compound. In formula (I) each of R¹, R², and R³ is independently hydrogen or an alkyl group having from 1 to 8 carbon atoms provided that R¹, R² and R³ are not simultaneously hydrogen.

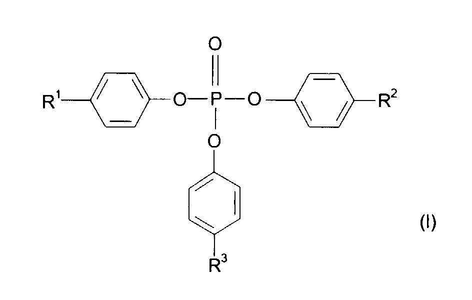

## Description

The present invention relates to a flame-retarded thermoplastic resin composition formed by using a specific aromatic orthophosphate ester and a nitrogen-containing compound.

A variety of aromatic orthophosphate esters have been widely used as flame retardants for thermoplastic resins in place of more conventional halogen containing flame retardants.

However, most of the aromatic orthophosphate esters which are generally used are liquid at normal temperature (25°C). In this case, there is a defect that a metering jet device, as well as a kneader, is required when kneading a resin with a phosphate ester.

Meanwhile, Japanese Patent Laid-Open No. 47,747/1986 describes that triphenyl phosphate, a solid aromatic orthophosphate ester, can be used as a flame retardant. However, triphenyl phosphate itself has a poor hydrolytic stability, and is volatilized when it is kneaded with a resin. Accordingly, a composition containing the same does not exhibit satisfactory heat resistance and humidity resistance, and has a deleterious effect on the working environment.

Further, the use of tricresyl phosphate in combination with melamine or melamine cyanurate is disclosed in Japanese Patent Laid-Open No. 71,752/1997. However, the tricresyl phosphate disclosed therein is liquid at normal temperature and hence, this method involves the drawback that a metering jet device is required when the flame retardant is kneaded with a thermoplastic resin.

Still further, a technique for flame-retardation of a thermoplastic resin using a combination of a phosphate ester having a relatively high molecular weight and a nitrogen compound is disclosed in Japanese Patent Laid-Open No. 325,409/1996. The phosphate ester used therein is itself good in that it is scarcely volatilized, but a defect still remains that it is liquid, requiring a metering jet device when it is kneaded with the resin.

In order to solve these problems, the use of tris(2,6-xylenyl) phosphate which is solid at normal temperature or tetra(2,6-xylyl)hydroquinone diphosphate which is also solid at normal temperature is disclosed in Japanese Patent Laid-Open No. 316,411/1995. However, these compounds are problematic in terms of resulting flame retardance and fluidity.

Further, when a thermoplastic resin is flame-retarded with a phosphate ester alone, the phosphate ester has to be added in a large amount. This has the disadvantage that the phosphate ester used acts as a flame retardant and also as a plasticizer, with the result that the mechanical strength and thermal deformation temperature of a molded article made from the resin are decreased.

With these problems in mind, the present inventors have sought to produce a flame-retarded thermoplastic resin composition, embodiments of which may be excellent in their workability during processing and heat resistance, in humidity resistance, mechanical strength and flame retardance.

The present inventors have assiduously conducted investigations and have consequently found that the combined use of a specific aromatic orthophosphate ester and a nitrogen compound as a flame retardant can provide, for the first time, a non-halogen flame-retarded thermoplastic resin composition embodiments of which may be excellent in their workability during processing and their heat resistance, humidity resistance, mechanical strength and flame retardance. This finding has led to the completion of the present invention.

That is, the present invention relates to a flame-retarded thermoplastic resin composition comprising 100 parts by weight of a thermoplastic resin, from 1 to 50 parts by weight of a nitrogen compound and from 1 to 50 parts by weight of an aromatic orthophosphate ester which is solid at normal temperature (25°C), and which meets formula (I) 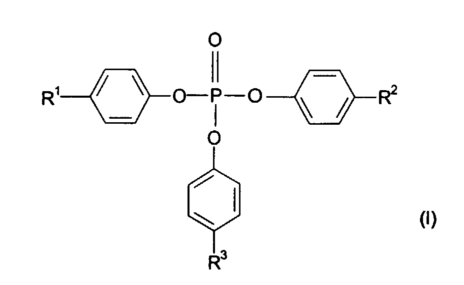 wherein R1, R2 and R3, independently from each other, represent a hydrogen atom or an alkyl group having from 1 to 8 carbon atoms, provided R¹, R² and R³ are not simultaneously hydrogen atoms.

Particularly preferred aromatic orthophosphate esters are tri(p-cresyl) phosphate or tris (p-tert-butylphenyl) phosphate.

The thermoplastic resin used in the present invention is not particularly limited and may be any which is ordinarily used in this field. Examples thereof include an ABS resin, a styrene resin, a polyvinyl chloride resin, a polyethylene resin, a polypropylene resin, a polyethylene terephthalate resin, a polybutylene terephthalate resin, a polycarbonate resin, a polyphenylene ether resin, a modified polyphenylene ether resin, a polyamide resin, a polysulfone resin, a polyvinyl acetate resin, and a polyacetal resin. These resins may be used either singly or in combination as required.

As mentioned above, preferred examples of orthophosphate ester include tri(p-cresyl) phosphate and tris(p-tert-butylphenyl) phosphate or the like. These compounds are solids at normal temperature (25°C).

Tris (p-n-butylphenyl) phosphate and tris(p-i-propylphenyl) phosphate which meet formula (I) and triphenyl phosphate wherein R¹, R² and R³ in formula (I) are hydrogen atoms at the same time are unsuitable for use in the compositions of the present invention because these are liquid at normal temperature.

The tricresyl phosphate which is generally used in industry is manufactured from a mixture of m-cresol and p-cresol as a starting material, and the product is liquid. Thus, it also cannot be used in the present invention.

The amount of the aromatic orthophosphate ester in the present invention is preferably between 1 and 50 parts by weight, especially preferably between 1 and 35% by weight per 100 parts by weight of the thermoplastic resin. When the amount is less than 1 part by weight, a large amount of a nitrogen-containing compound has to be added to impart a flame retardance, inviting a decrease in properties such as tensile strength and the like. When the amount exceeds 50 parts by weight, the aromatic orthophosphate ester added also acts as a plasticizer, which results in a decrease in properties such as tensile strength and the like. These aromatic orthophosphate esters may be used in the thermoplastic resin either singly or in combination as required.

The nitrogen-containing compound of the present invention is not particularly limited so long as it contains a nitrogen. For example, the nitrogen may be present in a compound containing an amine, imine, nitrile, hydroxyamine, oxime, nitro, nitroso, amide, imide, hydrazine, urea, azo, azoxy, diazo or azido group.

Preferred examples of nitrogen-containing compound include organic compounds having a triazine or guanidine structure and their inorganic acid salts, organic amine compounds and their inorganic acid salts, and inorganic salts of ammonium.

In the case of organic amine compounds having low-molecular weight and consequently high volatility, heating during molding processing may cause problems such as adhesion to metal moulds, and pollution of such moulds. Therefore inorganic acid salts of these compounds are more preferred.

Examples of nitrogen-containing compounds having a triazine or guanidine structure include melamine, melamine cyanurate, melamine phosphate, melamine phosphite, melamine pyrophosphate, melamine polyphosphate, melamine sulfate, melamine sulfite, melamine borate, guanidine, guanidine phosphate, guanidine phosphite, guanidine pyrophosphate, guanidine polyphosphate, guanidine sulfate, guanidine sulfite, guanidine borate, guanylurea phosphate and the like.

Examples of nitrogen-containing compounds which are organic amine compounds and of their inorganic salts, and of inorganic salts of ammonium include ammonium phosphate, ammonium phosphite, ammonium pyrophosphate, ammonium polyphosphate, ammonium phosphite, ethylenediamine phosphate, ethylenediamine phosphite, ethylenediamine sulfate, diethylenetriamine phosphate, diethylenetriamine phosphite, diethylenetriamine sulfate, hexamethylenetetramine phosphate, hexamethylenetetramine phosphite, hexamethylenetetramine sulfate, lysine, lysine phosphate, lysine phosphite, glycine, glycine phosphate, glycine phosphite, glutamic acid, ammonium glutamate, ethylenediamine glutamate and the like.

Among all of these the most preferred examples include melamine, melamine cyanurate, melamine pyrophosphate, melamine polyphosphate, ammonium phosphate, ammonium pyrophosphate and ammonium polyphosphate.

Considering the properties and the cost of the composition, it is advisable that the nitrogen content of the nitrogen-containing compound is 7% or more, and there is no upper limit of the nitrogen-containing content. The nitrogen-containing compound having the nitrogen content of 20% or more is more preferable. When the nitrogen content is less than 7%, it is difficult to achieve the desired flame retardance unless a large amount of the nitrogen compound is added. In this case, a decrease in properties such as mechanical strength of the composition may ensue. The amount of the nitrogen-containing compound is preferably between 1 and 50 parts by weight, especially preferably between 3 and 35 parts by weight per 100 parts by weight of the thermoplastic resin. When the amount is less than 1 part by weight, a large amount of the aromatic orthophosphate ester in the present invention has to be added to impart flame retardance, inviting a decrease in the properties such as tensile strength and the like. When the amount exceeds 50 parts by weight, a decrease in properties such as tensile strength and the like is also invited. The condition of the nitrogen-containing compound is not particularly limited, but it is advisable that the nitrogen compound, like the aromatic orthophosphate ester of the present invention, is preferably normally solid at normal temperature (25°C) for optimum workability.

Further, the flame-retarded thermoplastic resin composition of the present invention can be used in combination with a further flame retardant, a filler, a stabilizer, a pigment, a plasticizer, a lubricant, a dispersant, a foam stabilizer, an antistatic and a foaming agent or the like, all of which may ordinarily used as additives to various resins. Needless to say, the combined use of any of these additives should preferably not impair the characteristics of the present invention.

The composition comprising the aromatic orthophosphate ester which is solid at normal temperature (25°C), the nitrogen compound and the thermoplastic resin can be formed by conducting the kneading using a known device which is ordinarily employed in this field, such as a monoaxial kneader or a biaxial kneader.

Embodiments of the flame-retarded thermoplastic resin composition of the present invention may be especially useful when high humidity resistance and high heat resistance are required in particular, for example, in the field of electric or electronic parts and building materials. Further, embodiments of the invention may be produced even when a metering jet device is not provided as an attachment device to the manufacturing apparatus.

The present invention is illustrated specifically by referring to the following Production Examples, Examples and Comparative Examples. In these Examples, "parts" and "%" are on a weight basis.

### Production Example 1:

A 2-liter four-neck flask fitted with a stirrer and a thermometer was charged with 660 g (6.10 mols) of p-cresol (made by Wako Pure Chemical Industries, Ltd., 1st grade reagent) and 3.00 g of anhydrous aluminum chloride (made by Junsei Kagaku K.K., 1st grade reagent), and 307 g (2.00 mols) of phosphorus oxychloride (made by Junsei Kagaku K.K. 1st grade reagent) were added thereto under a nitrogen atmosphere at 70°C for 1 hour using a dropping funnel. The temperature was then elevated to 180°C for 5 hours. Subsequently, the reaction was conducted at the same temperature for 0.5 hour, and unreacted p-cresol was distilled off. The residue was then cooled, and the crystals solidified were pulverized. The amount of the resulting product [tri(p-cresyl) phosphate] was 708 g, and the yield thereof was 96%. 1H-NMR and the melting point of the product were measured. As a result, the melting point was between 76.5 and 76.8°C, and it was approximately consistent with a document value (77°C, described in Synthesis, vol. 7, 558 - 559, 1983).

### Production Example 2:

A 1-liter four-neck flask fitted with a stirrer and a thermometer was charged with 183 g (1.22 mols) of p-tert-butylphenol (made by Wako Pure Chemical Industries, Ltd., 1st grade reagent) and 0.53 g of anhydrous aluminum chloride (made by Junsei Kagaku K.K., 1st grade reagent), and 61 g (0.40 mols) of phosphorus oxychloride (made by Junsei Kagaku K.K., 1st grade reagent) were added thereto in a nitrogen atmosphere at room temperature for 0.5 hour using a dropping funnel. Subsequently, the temperature was elevated to 180°C for 7 hours. The reaction was then conducted at the same temperature for 0.5 hour, and the reaction solution was extracted with toluene and with water. The resulting organic layer was concentrated, and purified through recrystallization from ethanol. The amount of the resulting product [tris(p-tert-butylphenyl) phosphate] was 162 g, and the yield thereof was 82%. 1H-NMR and the melting point of the product were measured. As a result, the melting point was between 101.6 and 101.9°C, and it was approximately consistent with a document value (100 to 101°C, described in Synthesis, vol. 7, 558 - 559, 1983).

### Production Example 3:

A 1-liter four-neck flask fitted with a stirrer and a thermometer was charged with 149 g (6.10 mols) of 2,6-xylenol (made by Wako Pure Chemical Industries, Ltd., 1st grade reagent) and 0.52 g of anhydrous aluminum chloride (made by Junsei Chemical Co., Ltd., 1st grade reagent), and 61 g (0.40 mols) of phosphorus oxychloride (made by Junsei Chemical Co., Ltd., 1st grade reagent) were added thereto in a nitrogen atmosphere at 70°C for 1 hour using a dropping funnel. The temperature was then elevated to 180°C for 5 hours. Subsequently, the reaction was conducted at the same temperature for 0.5 hour, and unreacted 2,6-xylenol was distilled off. The residue was then cooled, and the crystals solidified were pulverized. The amount of the resulting product [tri(2,6-xylenyl) phosphate] was 156 g, and the yield thereof was 95%.

### Production Example 4:

Tetra(2,6-xylenyl)hydroquinone diphosphate was produced according to Example 5 of Japanese Patent Laid-Open No. 1,079/1993.

### Example 1:

One hundred parts of a polystyrene resin (H8652, made by Asahi Chemical Industry Co., Ltd.), 10 parts of tri(p-cresyl) phosphate produced in Production Example 1 and 10 parts of melamine (made by Wako Pure Chemical Industries, Ltd., special grade reagent) as a nitrogen-containing compound were kneaded and then pelletized at 210°C using a laboplastomill (MR type, manufactured by Toyo Seiki Seisaku-sho, Ltd.), a biaxial extruder (2D20S model, manufactured by Toyo Seiki Seisaku-sho, Ltd.) and a pelletizer (MC1, manufactured by Toyo Seiki Seisaku-sho, Ltd.). At this time, an amount of a gas generated during the kneading was visually observed. Using the resulting pellets, a melt flow rate (MFR) of the composition was measured at a measuring temperature of 200°C for a sample collection time of 30 seconds with a sample filling amount of 5 g and a load of 5.00 kgf by means of a melt indexer P101 (manufactured by Toyo Seiki Seisaku-sho, Ltd.) according to JIS K 7210. Subsequently, a No. 1 test piece according to JIS K 7113 and a test piece for UL-94 vertical test were prepared from the same pellets using an injection-molding machine (N40-BII, manufactured by The Japan Steel Works, Ltd.). A tensile strength of the resulting test pieces was evaluated according to a tensile test method of JIS K 6871 using a tensile tester (Strograph W5, manufactured by Toyo Seiki Seisaku-sho, Ltd.). Thereafter, a test for a heat resistance and a humidity resistance was conducted at a temperature of 121(C, a humidity of 100% and a pressure of 2 atm using a tester for a pressure cooker test (ETAC PLAMOUNIT HAST CHAMBER PM422, manufactured by Kusumoto Chemicals Ltd.). In this test, the test pieces were taken out 6, 12 and 24 hours after the start-up of the test, and the appearance of the test pieces after the drying was visually observed to evaluate the heat resistance and the humidity resistance. Then, the flame retardance of the test pieces prepared was measured using a V-type burning tester (manufactured by Suga Test Instruments Co., Ltd.).

### Example 2:

Example 1 was repeated except that tris(p-tert-butylphenyl) phosphate obtained in Production Example 2 was used as a phosphate ester.

### Comparative Example 1:

Example 1 was repeated except that a phosphate ester and melamine were not used.

### Comparative Example 2:

Example 1 was repeated except that triphenyl phosphate (Leofos TPP, made by Ajinomoto Co., Inc.) was used as a phosphate ester.

### Comparative Example 3:

Example 1 was repeated except that 10 parts of the phosphate ester obtained in Production Example 1 were used and melamine was not used.

### Comparative Example 4:

Example 1 was repeated except that 20 parts of the phosphate ester obtained in Production Example 1 were used and melamine was not used.

### Comparative Example 5:

Example 1 was repeated except that 10 parts of the phosphate ester obtained in Production Example 2 were used and melamine was not used.

### Comparative Example 6:

Example 1 was repeated except that 20 parts of the phosphate ester obtained in Production Example 2 were used and melamine was not used.

### Comparative Example 7:

Example 1 was repeated except that the phosphate ester obtained in Production Example 3 was used.

### Comparative Example 8:

Example 1 was repeated except that the phosphate ester obtained in Production Example 4 was used.

The results in Examples 1 and 2 and Comparative Examples 1 to 8 are shown in Table 1.

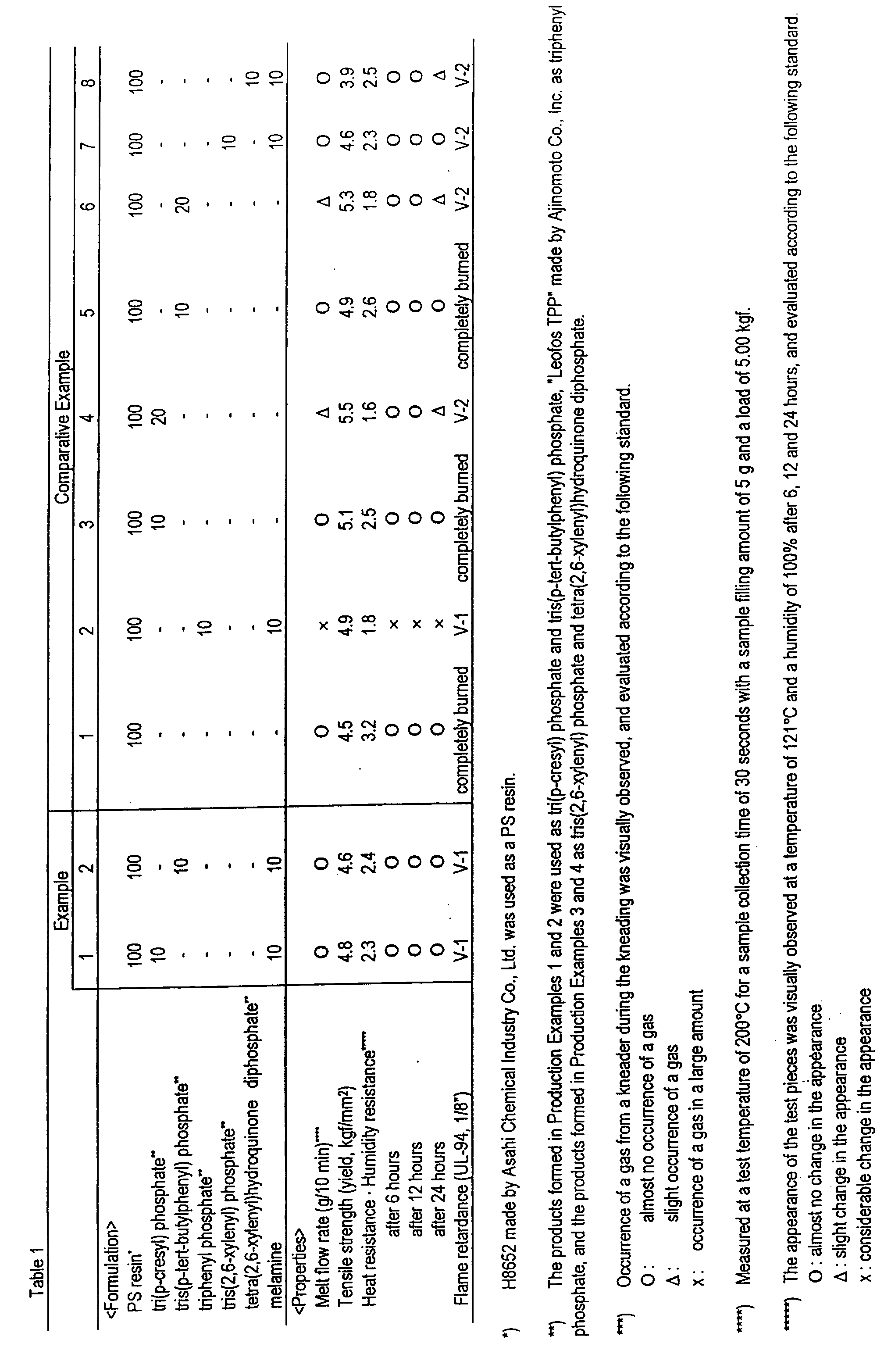

Table 1 revealed that the compositions and the molded articles in Examples 1 and 2 were excellent, compared with those in Comparative Examples 1 to 8, in all points of workability, heat resistance, humidity resistance, mechanical strength, flame retardance and fluidity.

## Claims

1. A flame-retarded thermoplastic resin composition comprising 100 parts by weight of a thermoplastic resin, from 1 to 50 parts of a nitrogen containing compound, and from 1 to 50 parts by weight of an aromatic orthophosphate ester which is solid at normal temperature (25°C) and which meets formula (I) 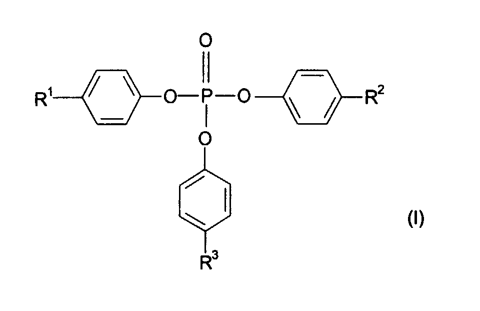 wherein R¹, R² and R³, independently from each other, represent a hydrogen atom or an alkyl group having from 1 to 8 carbon atoms, provided R¹, R² and R³ are not simultaneously hydrogen atoms.

2. The flame-retarded thermoplastic resin composition of claim 1, wherein the aromatic orthophosphate ester is tri(p-cresyl) phosphate.

3. The flame-retarded thermoplastic resin composition of claim 1, wherein the aromatic phosphate ester is tris(p-tert-butylphenyl) phosphate.

4. A method for the production of a flame-retarded thermoplastic resin composition of any one of claims 1-3 comprising mixing, in particular by kneading, 100 parts by weight of thermoplastic resin, from 1 to 50 parts by weight of a nitrogen compound, and 1 to 50 parts by weight of an aromatic orthophosphate ester which is solid at room temperature and meets formula (I) set out in claim 1.
